# EUROPÄISCHE PATENTSCHRIFT

(11) **EP 4 048 909 B1**
(45) Veröffentlichungstag und Bekanntmachung des Hinweises auf die Patenterteilung: **05.06.2024**
(21) Anmeldenummer: 20796771.2
(22) Anmeldetag: 22.10.2020
(51) Int. Cl.: F16B 21/02, F16B 5/06, F16B 5/02, H01Q 1/32, F16B 37/04

(54) **KUNSTSTOFFGEHÄUSEVORRICHTUNG ZUR INDIREKTEN VERSCHRAUBUNG FÜR EIN KRAFTFAHRZEUG**
PLASTIC HOUSING DEVICE FOR AN INDIRECT SCREW CONNECTION FOR A MOTOR VEHICLE
DISPOSITIF DE BOÎTIER EN MATIÈRE PLASTIQUE POUR UNE CONNEXION À VIS INDIRECTE POUR UN VÉHICULE AUTOMOBILE

(30) Priorität: 24.10.2019 DE 102019216409
(43) Veröffentlichungstag der Anmeldung: 31.08.2022
(73) Patentinhaber: Continental Automotive Technologies GmbH, 30175 Hannover (DE)
(72) Erfinder: FRISCH, Johann, 81739 München (DE); HILDEBRAND, Rudolf, 81739 München (DE)
(74) Vertreter: Continental Corporation
(86) Internationale Anmeldenummer: PCT/EP2020/079720
(87) Internationale Veröffentlichungsnummer: WO 2021/078843

(56) Entgegenhaltungen:
- CN-A- 102 734 304
- DE-A1- 3 900 468
- FR-A1- 2 923 275
- US-A- 5 370 488

## Beschreibung

### Technisches Gebiet

Die vorliegende Erfindung betrifft Kunststoffgehäusevorrichtung zur indirekten Verschraubung von Antennenmodulen für ein Kraftfahrzeug für ein Kraftfahrzeug.

### Technischer Hintergrund

Aus CN 102 734 304 A ist eine Kunststoffgehäusevorrichtung bekannt.

Ein (Verstärker)Modul mit Kunststoffgehäuse weist an seiner Unterseite ein zusätzliches Metallelement (metal cage) auf, welches in ein entsprechendes Montageloch im Fahrzeug(blech) gesteckt wird und das Modul so positioniert und ausrichtet.

Zusätzlich befindet sich innerhalb des Metallelements (metal cage) ein Klemmelement (clamping element), das von einer Schraube (screw) zentral gehalten wird. Durch anziehen der Schraube dreht sich das Klemmelement (clamping element) um 45° und bewegt sich Richtung Modulboden (plastic housing), wodurch das Modul an das Fahrzeugblech geklemmt wird.

Das zusätzliche Metallelement (metal cage) verursacht Kosten und macht Bauartbedingt eine aufwendige Montage des Klemmelements von der Seite erforderlich. Außerdem muss, aufgrund der Toleranzsituation, die Schraube in der Produktionslinie mit dem Klemmelement vorverschraubt werden (weitere Kosten).

### Zusammenfassung der Erfindung

Es ist eine Aufgabe der vorliegenden Erfindung, eine verbesserte Gehäusevorrichtung für ein Kraftfahrzeug bereitzustellen. Diese Aufgabe wird durch den Gegenstand des unabhängigen Anspruchs 1 gelöst.

Ausführungsformen und Weiterbildungen sind den abhängigen Patentansprüchen, der Beschreibung und den Figuren der Zeichnungen zu entnehmen.

Ein erster Aspekt der vorliegenden Erfindung betrifft eine Kunststoffgehäusevorrichtung zur indirekten Verschraubung für ein Kraftfahrzeug, wobei die Kunststoffgehäusevorrichtung umfasst: mindestens ein Positionierelement ein Klemmelement; und ein Schraubenelement; wobei das mindestens eine Positionierelement dazu ausgebildet ist, das Klemmelement formschlüssig in Position zu halten; wobei das Schraubenelement dazu ausgebildet ist, durch das mindestens eine Positionierelement gegen das Klemmelement gepresst zu werden und eine Drehung des Klemmelementes zu bewirken wobei das Klemmelement dazu ausgebildet ist, durch die Drehung die Kunststoffgehäusevorrichtung an ein Blech zu klemmen.

Die vorliegende Erfindung ermöglicht vorteilhaft, Kostenreduzierung zu bewerkstelligen, eine Vereinfachung der Montage in der Produktionslinie zu erreichen und eine Verbesserung der Toleranzsituation innerhalb der Modulbaugruppe und beim Verbau im Fahrzeug zu ermöglichen.

Die vorliegende Erfindung ermöglicht vorteilhaft, dass die Funktion des Metallelements, auf Englisch auch als "metal cage" bezeichnet, in das Kunststoffgehäuse, auf Englisch auch als "housing bottom" bezeichnet, integriert wurde. Durch entsprechende Schnapphaken am Kunststoffgehäuse kann das Klemmelement nun in z-Richtung eingebaut werden und wird formschlüssig in Position gehalten.

Die Schraube wird durch Federlaschen im Kunststoffdeckel, auf Englisch auch als "housing cover" bezeichnet, gegen das Klemmelement gepresst - Gewinde gegen Gewinde -, somit ist keine Vorverschraubung notwendig, da die Gewinde bei Drehung der Schraube sofort in Eingriff geraten. Toleranzen werden durch den Federweg der Laschen kompensiert.

Vorteilhafte Ausgestaltungen der vorliegenden Erfindung sind in den Unteransprüchen gekennzeichnet.

In einer vorteilhaften Ausführungsform der vorliegenden Erfindung ist vorgesehen, dass das Schraubenelement dazu ausgebildet ist, bei Drehung mit den Federlaschen in Eingriff zu geraten.

In einer weiteren vorteilhaften Ausführungsform der vorliegenden Erfindung ist vorgesehen, dass die Kunststoffgehäusevorrichtung dazu ausgebildet ist, dass Toleranzen durch einen entsprechend angepassten Federweg der an der Kunststoffgehäusevorrichtung angebrachte Federlaschen kompensiert werden.

In einer weiteren vorteilhaften Ausführungsform der vorliegenden Erfindung ist vorgesehen, dass die Kunststoffgehäusevorrichtung dazu ausgebildet ist, die Montage von Modulen im Fahrzeug zu ermöglichen.

In einer weiteren vorteilhaften Ausführungsform der vorliegenden Erfindung ist vorgesehen, dass die Kunststoffgehäusevorrichtung dazu ausgebildet ist, das Schraubenelement in eine Richtung zu drücken.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Gehäusevorrichtung gemäß zur Erläuterung der vorliegenden Erfindung;
- Fig. 2:: eine schematische Darstellung einer Kunststoffgehäusevorrichtung gemäß einem Ausführungsbeispiel der vorliegenden Erfindung
- Fig. 3:: eine schematische Darstellung einer Kunststoffgehäusevorrichtung gemäß einem Ausführungsbeispiel der vorliegenden Erfindung;
- Fig. 4:: eine schematische Darstellung einer Kunststoffgehäusevorrichtung gemäß einem Ausführungsbeispiel der vorliegenden Erfindung;
- Fig. 5:: eine schematische Darstellung einer Kunststoffgehäusevorrichtung gemäß einem Ausführungsbeispiel der vorliegenden Erfindung;
- Fig. 6:: eine schematische Darstellung einer Kunststoffgehäusevorrichtung gemäß einem Ausführungsbeispiel der vorliegenden Erfindung;
- Fig. 7:: eine schematische Darstellung einer Kunststoffgehäusevorrichtung gemäß einem Ausführungsbeispiel der vorliegenden Erfindung; und
- Fig. 8:: eine schematische Darstellung einer Kunststoffgehäusevorrichtung gemäß einem Ausführungsbeispiel der vorliegenden Erfindung;
- Fig. 9:: eine schematische Darstellung einer Kunststoffgehäusevorrichtung gemäß einem Ausführungsbeispiel der vorliegenden Erfindung; und
- Fig. 10:: eine schematische Darstellung einer Kunststoffgehäusevorrichtung gemäß einem Ausführungsbeispiel, das nicht zur vorliegenden Erfindung gehört.

Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

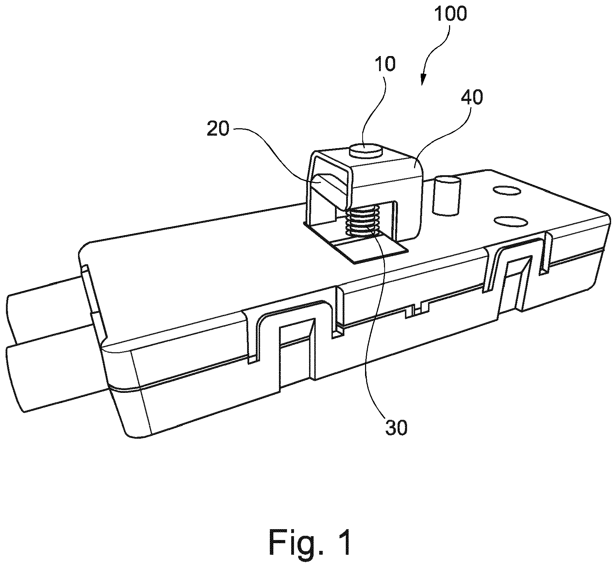

Die Fig. 1 zeigt eine schematische Darstellung einer Gehäusevorrichtung 100 zur Erläuterung der vorliegenden Erfindung. Fig. 1 zeigt den Stand der Technik, ein Gehäuse mit "metal cage", "Metallkäfig".

Eine Bohrung 10 ist in den Metallkäfig 40 geformt.

Das Klemmelement 20 muss von der Seite in den "metal cage" eingesetzt und in 0°-Position ganz oben positioniert werden. Dadurch wird ein Durchstecken des Schraubenelements 30 durch das Gewinde im Klemmelement und die Bohrung im "metal cage" möglich und dies kann vorverschraubt werden.

Das Klemmelement 20 wird durch weiterdrehen des Schraubenelements 30 nach unten gezogen und in 45°-Position gedreht, um zu verriegeln. Das Modul wird in der Montagebohrung mit dem Klemmelement durchgehend heruntergezogen und in 45°-Stellung verbracht.

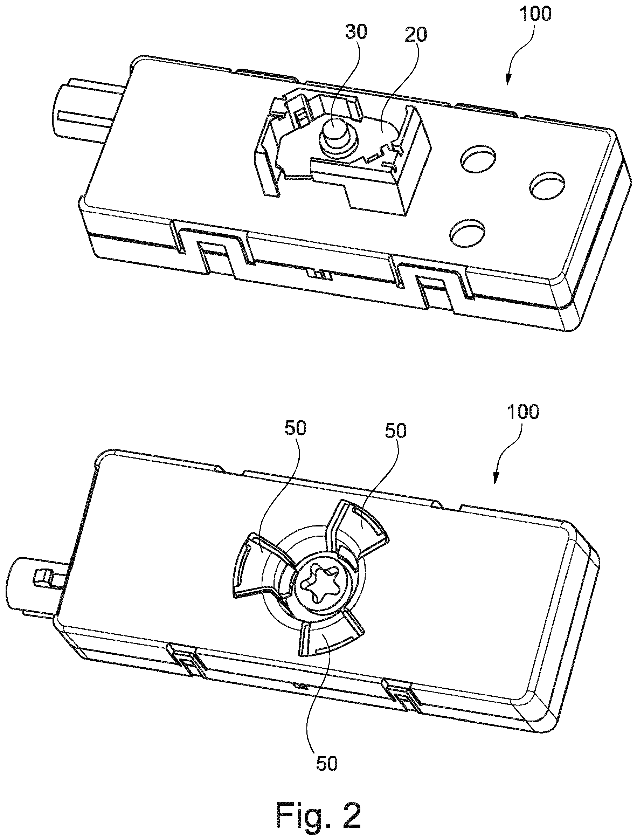

Die Fig. 2 zeigt eine schematische Darstellung einer Kunststoffgehäusevorrichtung 100 gemäß einem Ausführungsbeispiel der vorliegenden Erfindung.

Eine Oberseite und eine Unterseite der Kunststoffgehäusevorrichtung 100 ist in der Fig. 2 dargestellt.

Bei der Darstellung der Oberseite ist das Klemmelement 20 und das Schraubenelement 30 sichtbar, bei der Darstellung der Unterseite der Kunststoffgehäusevorrichtung 100 ferner noch das Positionierelement 50, in der Figur 2 als drei Federlaschen ausgebildet.

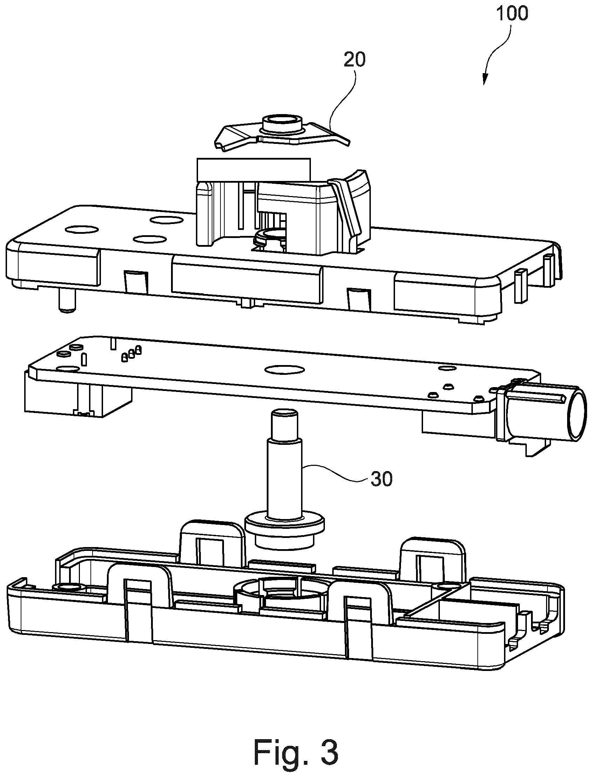

Die Fig. 3 zeigt eine schematische Darstellung einer Kunststoffgehäusevorrichtung gemäß einem Ausführungsbeispiel der vorliegenden Erfindung.

Von oben nach unten ist in der Fig. 3 dargestellt:
Oben in der Fig. 3 ist ein Klemmelement 20 dargestellt. Die Kunststoffgehäusevorrichtung 100 umfasst einen einteiligen Gehäuseboden. Eine Leiterplatte als ein Träger für elektronische Bauteile ist ebenso in der Fig. 3 dargestellt. Ebenso zeigt die Fig. 3 ein Schraubenelement 30 und ein Gehäusedeckel.

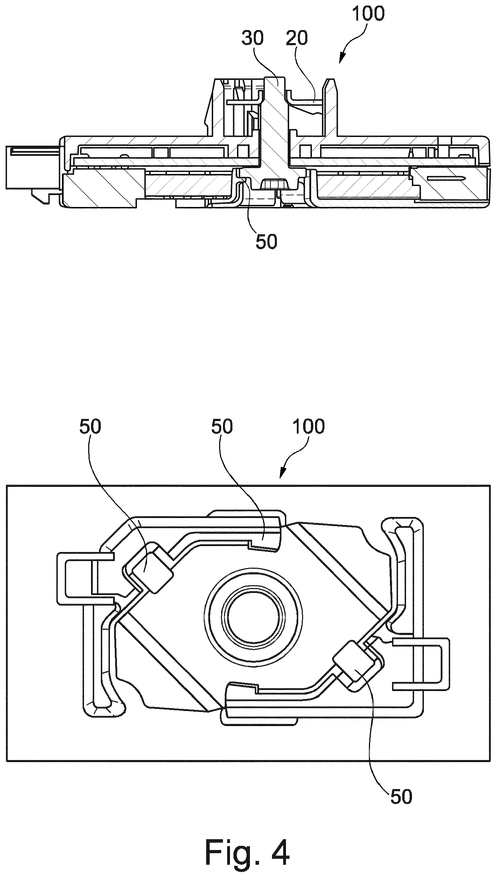

Die Fig. 4 zeigt eine schematische Darstellung einer Kunststoffgehäusevorrichtung gemäß einem Ausführungsbeispiel der vorliegenden Erfindung.

Die Fig. 4 zeigt ein Klemmelement, welches gegen Haken 50 gedrückt im Gehäuseboden wird.

Der erste Gewindegang des Schraubenelementes 30 ist gegen das Klemmelement 20 gedrückt.

Der Schraubenkopf liegt auf dem Gehäusedeckel auf.

Positionierelemente 50 in der Ausführungsform als Federbelastete Arme drücken das Schraubenelemente 30 nach oben.

Eine Drehung des Klemmelements 20 wird beispielsweise in Neutralstellung verhindert.

Die Fig. 4 zeigt eine schematische Darstellung einer Kunststoffgehäusevorrichtung gemäß einem Ausführungsbeispiel der vorliegenden Erfindung, wobei vorgesehen ist, dass als Positionierelement Haken das Klemmelement sichern.

Die untere Darstellung in der Fig. 4 zeigt, das Klemmelement in 0°-Position.

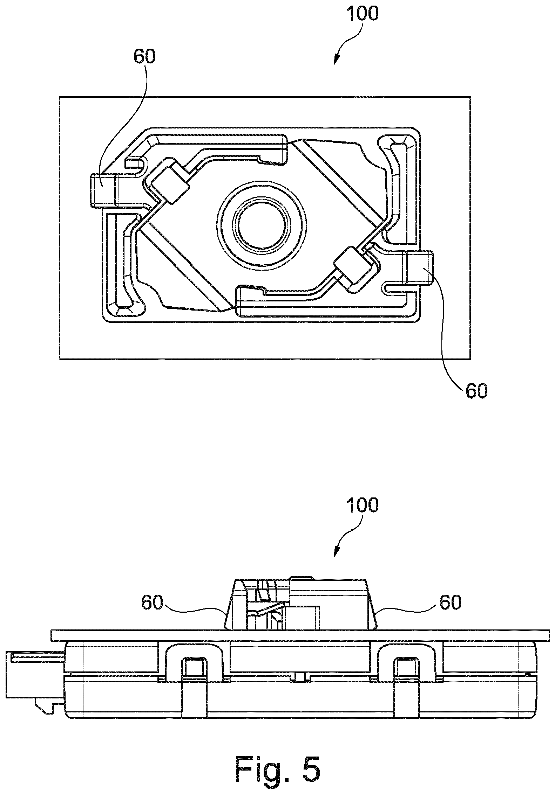

Die Fig. 5 zeigt eine schematische Darstellung einer Kunststoffgehäusevorrichtung gemäß einem Ausführungsbeispiel der vorliegenden Erfindung.

Die Fig. 5 zeigt zwei Vorhaltehaken 60.

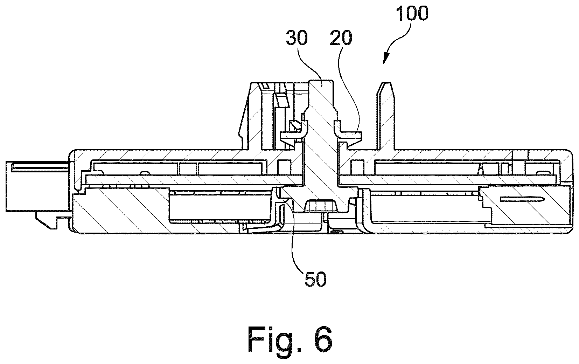

Die Fig. 6 zeigt eine schematische Darstellung einer Kunststoffgehäusevorrichtung gemäß einem Ausführungsbeispiel der vorliegenden Erfindung.

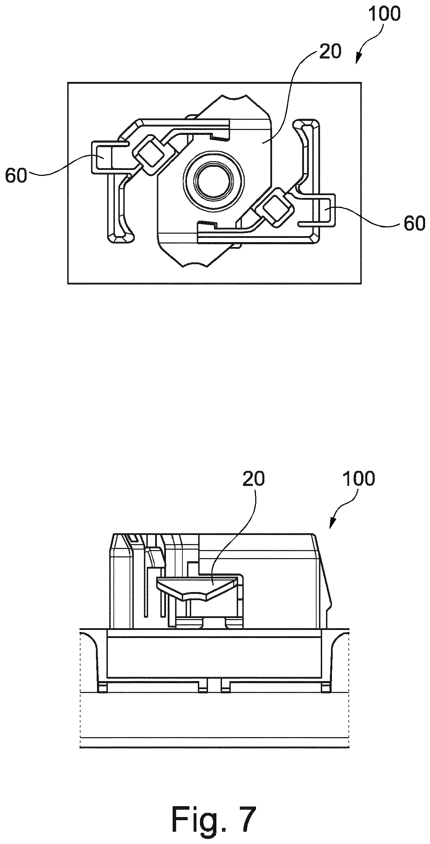

Die Fig. 7 zeigt eine schematische Darstellung einer Kunststoffgehäusevorrichtung gemäß einem Ausführungsbeispiel der vorliegenden Erfindung.

Die Fig. 7 zeigt das Klemmelement in 45°-Position.

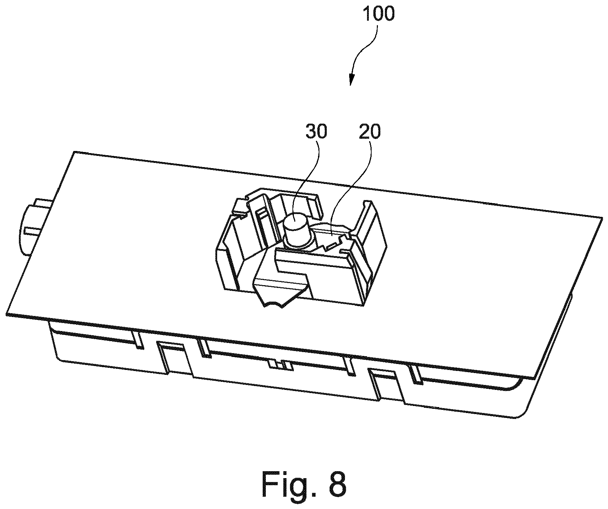

Die Fig. 8 zeigt eine schematische Darstellung einer Kunststoffgehäusevorrichtung gemäß einem Ausführungsbeispiel der vorliegenden Erfindung.

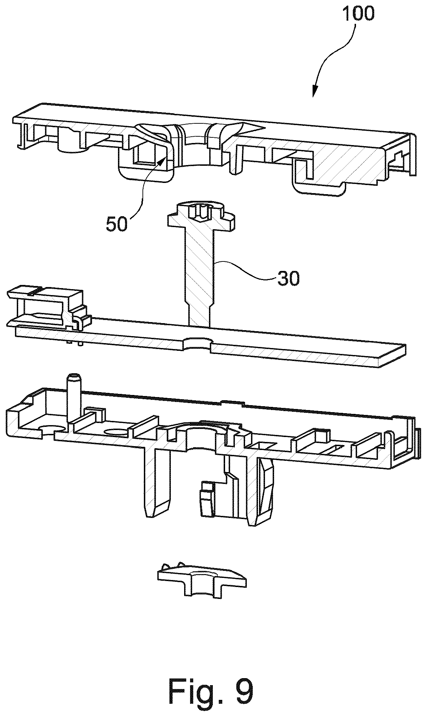

Die Fig. 9 zeigt eine schematische Darstellung einer Kunststoffgehäusevorrichtung gemäß einem Ausführungsbeispiel der vorliegenden Erfindung.

Bei der in der Fig. 9 dargestellten Kunststoffgehäusevorrichtung ist das mindestens eine Positionierelement 50 als eine Federlaschen bzw. ein eine Schnapphakenelement ausgebildet.

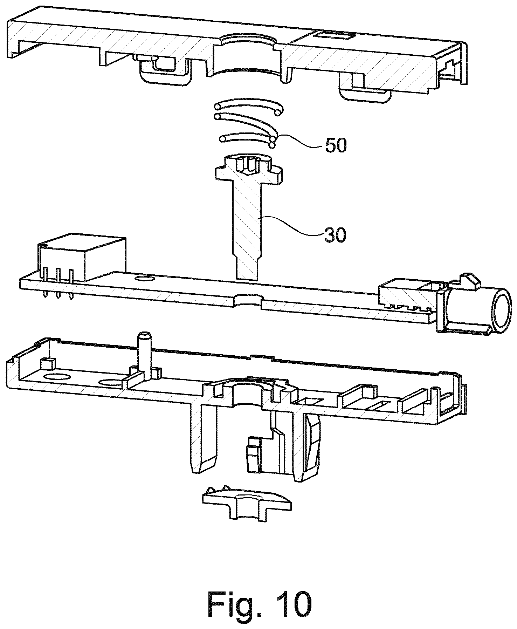

Die Fig. 10 zeigt eine schematische Darstellung einer Kunststoffgehäusevorrichtung gemäß einem Ausführungsbeispiel, das nicht zur vorliegenden Erfindung gehört.

Bei der in der Fig. 10 dargestellten Kunststoffgehäusevorrichtung ist das mindestens eine Positionierelement 50 als eine Schraubenfeder ausgebildet. Obwohl die vorliegende Erfindung anhand bevorzugter Ausführungsbeispiele vorstehend beschrieben wurde, ist sie nicht darauf beschränkt, sondern auf vielfältige Art und Weise modifizierbar.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kunststoffgehäusevorrichtung (100) zur indirekten Verschraubung für ein Kraftfahrzeug, wobei die Kunststoffgehäusevorrichtung (100) umfasst:
- mindestens ein Positionierelement (50);
- ein Klemmelement (20); und
- ein Schraubenelement (30);
wobei ein erstes Positionierelement (50) dazu ausgebildet ist, das Klemmelement (20) formschlüssig in Position zu halten;
wobei das Schraubenelement (30) dazu ausgebildet ist, durch ein zweites Positionierelement (50) gegen das Klemmelement gepresst zu werden und eine Drehung des Klemmelementes zu bewirken;
wobei das Klemmelement dazu ausgebildet ist, durch die Drehung die Kunststoffgehäusevorrichtung (100) an ein Blech zu klemmen, **dadurch gekennzeichnet, dass** das zweite Positionierelement (50) als eine Federlasche ausgebildet ist.

2. Kunststoffgehäusevorrichtung (100) nach Anspruch 1,
wobei das Schraubenelement dazu ausgebildet ist, bei Drehung mit Federlaschen in Eingriff zu geraten.

3. Kunststoffgehäusevorrichtung (100) nach Anspruch 1 oder 2,
wobei die Kunststoffgehäusevorrichtung (100) dazu ausgebildet ist, dass Toleranzen durch einen entsprechend angepassten Federweg der an der Kunststoffgehäusevorrichtung angebrachte Federlaschen kompensiert werden.

4. Kunststoffgehäusevorrichtung (100) nach einem der vorhergehenden Ansprüche,
wobei die Kunststoffgehäusevorrichtung (100) dazu ausgebildet ist, die Montage von Modulen im Fahrzeug zu ermöglichen.

5. Kunststoffgehäusevorrichtung (100) nach einem der vorhergehenden Ansprüche,
wobei das Schraubenelement einen Schraubenkopf aufweist, welcher auf dem Gehäusedeckel aufliegt.

6. Kunststoffgehäusevorrichtung (100) nach einem der vorhergehenden Ansprüche,
wobei die Kunststoffgehäusevorrichtung (100) dazu ausgebildet ist, das Schraubenelement in eine Richtung zu drücken.

## Claims

1. Plastics housing device (100) for indirect screw connection for a motor vehicle, wherein the plastics housing device (100) comprises:
- at least one positioning element (50);
- a clamping element (20); and
- a screw element (30);
wherein a first positioning element (50) is configured to hold the clamping element (20) in position in a form-fitting manner;
wherein the screw element (30) is configured to be pressed against the clamping element by a second positioning element (50) and to cause a rotation of the clamping element;
wherein the clamping element is configured to clamp the plastics housing device (100) to a metal panel by way of the rotation,
**characterized in that** the second positioning element (50) is in the form of a spring tab.

2. Plastics housing device (100) according to Claim 1,
wherein the screw element is configured to engage with spring tabs when rotated.

3. Plastics housing device (100) according to Claim 1 or 2,
wherein the plastics housing device (100) is configured such that tolerances are compensated for by a correspondingly adapted spring travel of the spring tabs attached to the plastics housing device.

4. Plastics housing device (100) according to one of the preceding claims,
wherein the plastics housing device (100) is configured to allow the installation of modules in the vehicle.

5. Plastics housing device (100) according to one of the preceding claims,
wherein the screw element has a screw head that lies on the housing cover.

6. Plastics housing device (100) according to one of the preceding claims,
wherein the plastics housing device (100) is configured to push the screw element in one direction.

## Revendications

1. Dispositif de boîtier en matière plastique (100) pour le vissage indirect pour un véhicule automobile, le dispositif de boîtier en matière plastique (100) comprenant :
- au moins un élément de positionnement (50) ;
- un élément de serrage (20) ; et
- un élément de vissage (30) ;
un premier élément de positionnement (50) étant configuré pour maintenir l'élément de serrage (20) en position par complémentarité de forme ;
l'élément de vissage (30) étant configuré pour être pressé contre l'élément de serrage par un deuxième élément de positionnement (50) et pour provoquer une rotation de l'élément de serrage ;
l'élément de serrage étant configuré pour serrer le dispositif de boîtier en matière plastique (100) sur une tôle par la rotation,
**caractérisé en ce que** le deuxième élément de positionnement (50) est réalisé sous la forme d'une patte élastique.

2. Dispositif de boîtier en matière plastique (100) selon la revendication 1,
dans lequel l'élément de vissage est configuré pour s'engager avec des pattes élastiques lors de la rotation.

3. Dispositif de boîtier en matière plastique (100) selon la revendication 1 ou 2,
dans lequel le dispositif de boîtier en matière plastique (100) est configuré pour que des tolérances soient compensées par une course élastique adaptée de manière appropriée des pattes élastiques montées sur le dispositif de boîtier en matière plastique.

4. Dispositif de boîtier en matière plastique (100) selon l'une quelconque des revendications précédentes,
dans lequel le dispositif de boîtier en matière plastique (100) est configuré pour permettre le montage de modules dans le véhicule.

5. Dispositif de boîtier en matière plastique (100) selon l'une quelconque des revendications précédentes,
dans lequel l'élément de vissage présente une tête de vis qui repose sur le couvercle du boîtier.

6. Dispositif de boîtier en matière plastique (100) selon l'une quelconque des revendications précédentes,
dans lequel le dispositif de boîtier en matière plastique (100) est configuré pour pousser l'élément de vissage dans une direction.
